# EUROPEAN PATENT APPLICATION

(11) **EP 3 778 397 A1**
(43) Date of publication of application: **17.02.2021**
(21) Application number: 19780639.1
(22) Date of filing: 03.04.2019
(51) Int. Cl.: B64D 11/02

(54) **METHOD FOR MANUFACTURING AIRCRAFT LAVATORY UNIT**

(30) Priority: 03.04.2018 JP 2018071376
(71) Applicant: The Yokohama Rubber Co., Ltd., Tokyo 105-8685 (JP)
(72) Inventor: TAKEDA, Mitsuaki, Hiratsuka-shi, Kanagawa 254-8601 (JP)
(74) Representative: Dilg, Haeusler, Schindelmann Patentanwaltsgesellschaft mbH
(86) International application number: PCT/JP2019/014745
(87) International publication number: WO 2019/194215

(57) **Abstract**

Provided is a method of manufacturing an aircraft lavatory unit that is advantageous for replacing a sink with a new sink in a short period of time and at low cost. In manufacturing structural frames (12), shapes and positions of a faucet mounting seat (38) and a plurality of brackets (18) of each of the structural frames (12) in three axial directions, that is, an X-axis direction in which a front wall (1206) and a rear wall (1204) face each other, a Y-axis direction in which a pair of side walls (1208) face each other, and a Z-axis direction which is a vertical direction are formed to be identical. In manufacturing sinks (16), shapes and positions of an installation hole (2804) and a plurality of bracket coupling portions (30) of each of the sinks (16) the three axial directions are formed to be identical.

## Description

### Technical Field

The present invention relates to a method of manufacturing an aircraft lavatory unit.

### Background Art

An aircraft lavatory unit includes a structural frame that includes a floor board, a front wall that stands up from the floor board, a rear wall that stands up from the floor board and faces the front wall, and a pair of side walls that stand up from the floor board and connect both sides of the front wall and both sides of the rear wall to create an interior serving as a lavatory, and a sink provided on one of the pair of side walls inside the structural frame.
The sink includes a counter table having a basin and provided on an upper surface of the sink, and a raised wall that rises from an end portion of the counter table and includes a faucet installation hole formed penetrating the raised wall and used for coupling a faucet unit to a faucet mounting seat. In recent years, airline companies have wished to replace the sink with a sink having a counter table or a raised wall of a different color, or a sink having a basin of a different shape or color.
In such a case, conventionally, the installation structure of the sink on the side wall and the position where the faucet unit is disposed are redesigned from scratch.

### Citation List

### Patent Literature

Patent Document 1: WO 2014/141701

### Summary of Invention

### Technical Problem

Accordingly, it takes a lot of time to design and fabricate a sink, and it also takes a lot of time to mount a new sink. This means that replacing a sink with a new sink for a short period of time and at low cost has been impossible, which is a problem.
The present invention has been devised in view of the above circumstances, and an object of the present invention is to provide a method of manufacturing an aircraft lavatory unit that is advantageous for replacing a sink with a new sink in a short period of time and at low cost.

### Solution to Problem

In order to achieve the object described above, an embodiment of the present invention is a method of manufacturing an aircraft lavatory unit, the aircraft lavatory unit including a structural frame including a floor board, a front wall that stands up from the floor board, a rear wall that stands up from the floor board and faces the front wall, and a pair of side walls that stand up from the floor board and connect both sides of the rear wall and both sides of the front wall to create an interior serving as a lavatory, and a sink provided on one side wall of the pair of side walls inside the structural frame, the method including providing a faucet mounting seat to which a faucet unit is releasably coupled on the one side wall, and providing a plurality of brackets separated at intervals in a direction in which the front wall and the rear wall face each other, forming the sink including a counter table including a basin on a top surface of the counter table and a plurality of bracket coupling portions, each of which being releasably coupled to each of the plurality of brackets on a bottom surface of the counter table, and a raised wall that stands up from an end portion of the counter table on a side of the one side wall, includes a faucet installation hole used for coupling the faucet unit to the faucet mounting seat formed penetrating the raised wall, and is pressed against the one side wall, the raised wall formed with a length such that the raised wall is fixed by being sandwiched between the rear wall and the front wall, in manufacturing the structural frame, forming shapes and positions of the faucet mounting seat and the plurality of brackets in three axial directions to be identical, the three axial directions being an X-axis direction in which the front wall and the rear wall face each other, a Y-axis direction in which the pair of side walls face each other, and a Z-axis direction that is a vertical direction, and, in manufacturing the sink, forming shapes and positions of the faucet installation hole and the plurality of bracket coupling portions to be identical in the three axial directions.
In addition, in an embodiment of the present invention, the sink includes a drainage member connected to a drain hole of the basin, and, in manufacturing the sink, shapes and positions of a lower portion of the drainage member in the three axial directions are formed to be identical, the lower portion of the drainage member being releasably coupled to an upper portion of a drain pipe.
In addition, in an embodiment of the present invention, a lower storage portion for storing a trash can device is provided at a location on the one side wall below the sink, and in manufacturing the sink, a location on a lower surface of an end portion of the counter table away from the one side wall is formed into a shape corresponding to a top surface of the lower storage portion.
In addition, in an embodiment of the present invention, an upper storage portion for storing consumable supplies of the lavatory is provided at a location on the one side wall above the sink, and in manufacturing the sink, an upper end surface of the raised wall is formed into a shape corresponding to a lower surface of the upper storage portion.
In addition, in an embodiment of the present invention, a locking lever is provided, the locking lever including a gripped portion being grippable and having an elongated shape, a shaft portion projecting from a central portion of the gripped portion in a longitudinal direction of the gripped portion, a locking portion including a central portion in a longitudinal direction of the locking portion attached to a tip of the shaft portion and having an elongated shape, and a coil spring being wound around the shaft portion and lockable to the gripped portion, each of the plurality of brackets includes a support plate portion that supports each of the plurality of bracket coupling portions from below, and a bracket lateral groove formed in the support plate portion and that allows insertion of the shaft portion and the locking portion, each of the plurality of bracket coupling portions includes a supported plate portion supported by the support plate portion, a storage space provided above the supported plate portion that allows storage of the locking portion, and a bracket coupling portion lateral groove provided in the supported plate portion and that allows insertion of the shaft portion and the locking portion, and each of the plurality of brackets and each of the plurality of bracket coupling portions are coupled by placing the supported plate portion on the support plate portion, inserting the shaft portion through the bracket lateral groove and the bracket coupling portion lateral groove, causing a longitudinal direction of the locking portion to extend in a direction intersecting the longitudinal direction of the bracket coupling portion lateral groove in the storage space, and locking the locking portion to the supported plate portion by using an elastic force of the coil spring compressed between the gripped portion and the support plate portion, the gripped portion being located below the support plate portion. In addition, in an embodiment of the present invention, the gripped portion and the locking portion extend in mutually orthogonal directions when viewed from an axial direction of the shaft portion.
In addition, in an embodiment of the present invention, a cross groove is formed in the support plate portion, the cross groove including an insertion groove that allows insertion of the shaft portion and the locking portion, and a locking groove in which a lower end of the locking portion is lockable, the bracket lateral groove is formed of the insertion groove of the support plate portion, a cross groove having a shape identical to a shape of the cross groove is formed in the supported plate portion, the cross groove including the insertion groove and the locking groove, and the bracket coupling portion lateral groove is formed of the insertion groove of the supported plate portion.

### Advantageous Effects of Invention

According to an embodiment of the present invention, when an airline company wishes to change a sink, the bracket coupling portions are removed from the brackets, the faucet unit is removed from the faucet mounting seat, and the sink is removed from the one side wall. Then, a sink in which at least one of the color of the counter table, the color of the raised wall, and the shape or color of the basin differs and which meets the demands of the airline company is prepared, a counter table is attached to the one side wall using the brackets and the bracket coupling portions, and the faucet unit is coupled to the faucet mounting seat via the faucet installation hole to install the sink on the one side wall.
Accordingly, it is not necessary to redesign the installation structure of the sink on the side wall and the placement location of the faucet unit from scratch, and it is possible to replace the sink with a new sink in a short period of time and at low cost.
Further, the raised wall of the sink is fixed by being sandwiched between the front wall and the rear wall in a direction in which the front wall and the rear wall face each other, and the sink is connected in an upward direction, a direction in which the front wall and the rear wall face each other, and a direction in which the pair of side walls face each other in an unmovable manner at a plurality of positions separated at intervals in the direction in which the front wall and the rear wall face each other using the brackets and the bracket coupling portions, which is advantageous in mounting the sink stably on the one side wall.
In addition, according to an embodiment of the present invention, when the positions of the lower portions of the drainage members in the three axial directions are formed to be identical and the shapes thereof are formed to be identical, or when a portion on the lower surface of the end portion of the counter table away from the one side wall has a shape corresponding to the upper surface of the lower storage portion, or the upper end surface of the raised wall has a shape corresponding to the lower surface of the upper storage portion, this is advantageous for replacing the sink with a new sink in a short period of time and at low cost.
In addition, using a locking lever provided with a gripped portion, a shaft portion, a locking portion, and a coil spring is advantageous for easily performing engagement and disengagement of the bracket and the bracket coupling portion.
In addition, when the gripped portion and the locking portion extend in mutually orthogonal directions when viewed from the axial direction of the shaft portion, it can be instantaneously determined at a glance that the locking lever is used by being rotated, which is advantageous for easily performing engagement and disengagement of the bracket and the bracket coupling portion.
In addition, forming the cross groove including the insertion groove and the locking groove in the support plate portion is advantageous in preventing loss of the locking lever when the bracket and the bracket coupling portion are removed, and forming the cross groove including the insertion groove and the locking groove in the coupling plate portion is advantageous in holding the coupled state of the coupling plate portion and the mounting plate portion.

### Brief Description of Drawings

- FIG. 1(A): is a perspective view illustrating a state in which a first sink is mounted on one side wall, and FIG. 1(B) is a perspective view of the first sink when viewed from another angle.
- FIG. 2(A): is a perspective view illustrating a state in which a second sink is mounted on one side wall, and FIG. 2(B) is a perspective view of the second sink when viewed from another angle.
- FIG. 3(A): is a perspective view illustrating a state in which a third sink is mounted on one side wall, and FIG. 3(B) is a perspective view of the third sink when viewed from another angle.
- FIG. 4: is a perspective view of an aircraft lavatory unit with one side wall omitted, a sink removed, and a portion of a door of a lower storage portion opened.
- FIG. 5: is a side view illustrating a state in which the first sink is mounted on the one side wall.
- FIG. 6: is a side view illustrating a state in which the second sink is mounted on the one side wall.
- FIG. 7: is a side view illustrating a state in which the third sink is mounted on the one side wall.
- FIG. 8(A): is a perspective view of the first sink, FIG. 8(B) is a perspective view of the second sink, and FIG. 8(C) is a perspective view of the third sink.
- FIG. 9(A): is a side view illustrating a state in which a locking portion of a locking lever is inserted into an insertion groove of a bracket, and FIG. 9(B) is a perspective view of FIG. 9(A).
- FIG. 10(A): is a side view illustrating a state in which the locking portion of the locking lever is inserted until a top portion of the insertion groove of a bracket coupling portion, and FIG. 10(B) is a perspective view of FIG. 10(A).
- FIG. 11(A): is a side view illustrating a state in which the locking portion of the locking lever is locked into a locking groove of the bracket coupling portion, and FIG. 11(B) is a perspective view of FIG. 11(A).
- FIG. 12(A): is a front view of the locking lever, and FIG. 12(B) is a side view of the locking lever.
- FIG. 13: is a plan view illustrating a cross groove formed in the bracket and the bracket coupling portion.

### Description of Embodiments

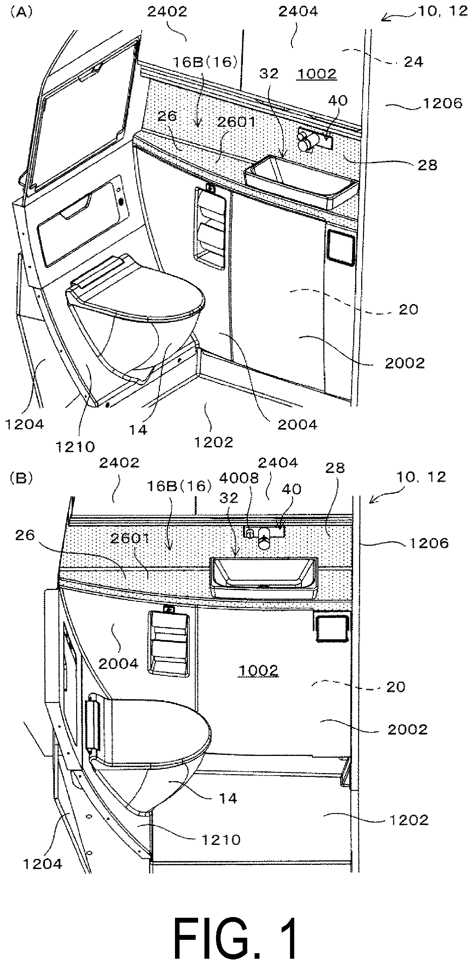

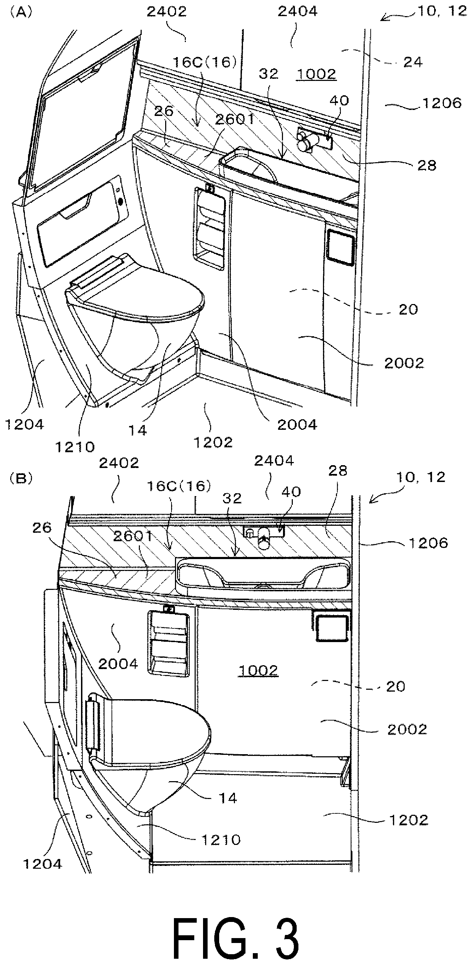

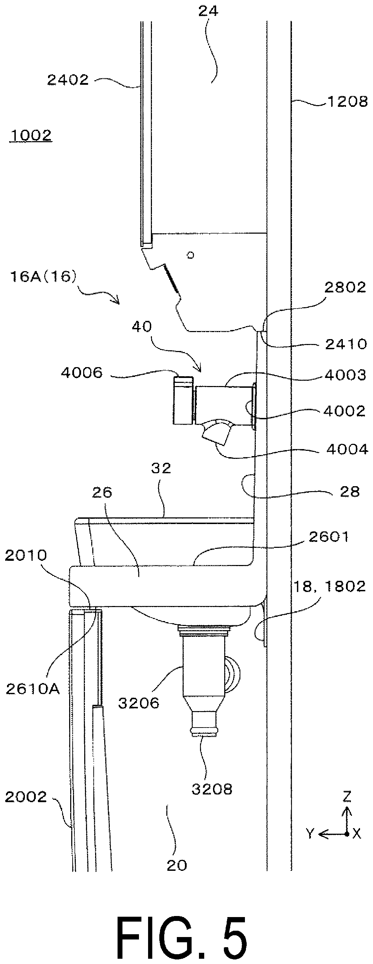

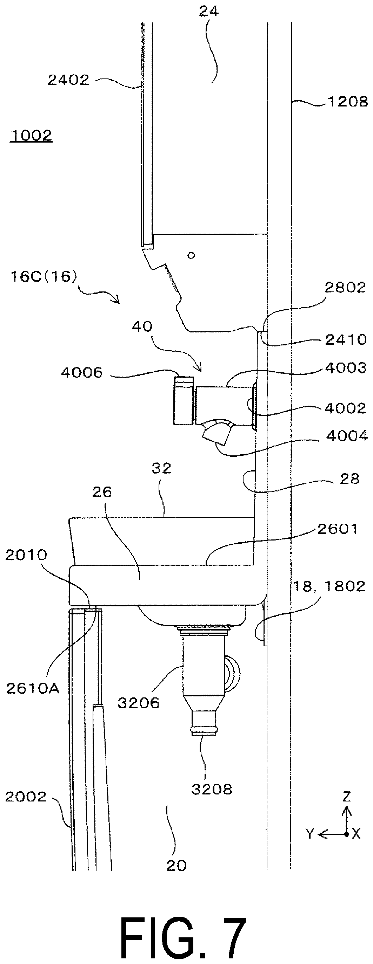

Next, an embodiment of the present invention will be described with reference to the drawings.
As illustrated in FIGS. 1(A) to 4, a structural frame 12 of an aircraft lavatory unit 10 includes a floor board 1202 on which a toilet 14 is disposed, a rear wall 1204 that stands up from the floor board 1202 behind the toilet 14, a front wall 1206 that stands up from the floor board 1202 and faces the rear wall 1204, and a pair of side walls 1208 that stand up from the floor board 1202, connect both sides of the rear wall 1204 and both sides of the front wall 1206 and are parallel with each other. Inner sides of the walls 1204, 1206, and 1208 constitute a lavatory 1002.
In the present embodiment, an inner wall 1210 is provided in front of the rear wall 1204, and the toilet 14 is provided on the floor board 1202 through the inner wall 1210.
As illustrated in FIGS. 5 to 7, a sink 16 is provided on one side wall 1208 of the pair of side walls 1208, and is located beside the toilet 14.

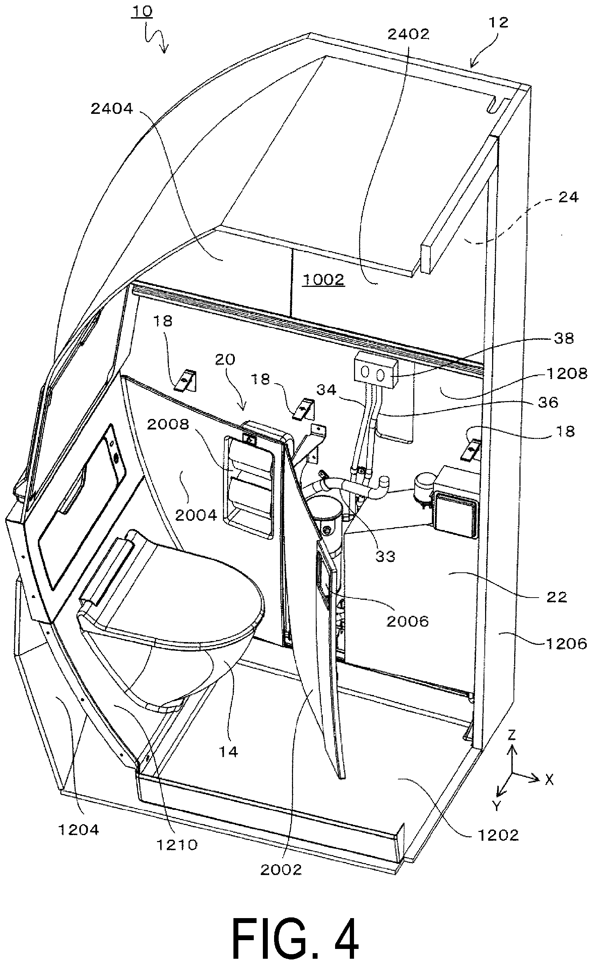

As illustrated in FIG. 4, a plurality of brackets 18 used for supporting the sink 16 from below are provided on the one side wall 1208 separated at intervals in a direction in which the rear wall 1204 and the front wall 1206 face each other. Three brackets 18 are provided in the present embodiment.
For convenience of explanation, in the structural frame 12 of the aircraft lavatory unit 10, in the present embodiment, positions of the plurality of brackets 18 provided on the one side wall 1208 in three directions, that is, an X-axis direction, a Y-axis direction, and a Z-axis direction in the aircraft lavatory unit 10 to which the sink 16 is applied are all formed to be identical, where the direction in which the rear wall 1204 and the front wall 1206 face each other is an X-axis direction, a direction in which the pair of side walls 1208 face each other is a Y-axis direction, and a vertical direction is a Z-axis direction.
Below the sink 16 is a lower storage portion 20 for storing a trash can device 22 with a fire extinguishing function and the like. The lower storage portion 20 can be opened and closed by using a plurality of doors 2002, 2004.
In FIG. 4, reference sign 2006 denotes a trash slot and reference sign 2008 denotes a toilet paper installation space.
Above the sink 16 is an upper storage portion 24 for storing consumable supplies of the lavatory 1002 such as facial tissues. The upper storage portion 24 is opened and closed by using a plurality of mirrored doors 2402, 2404.

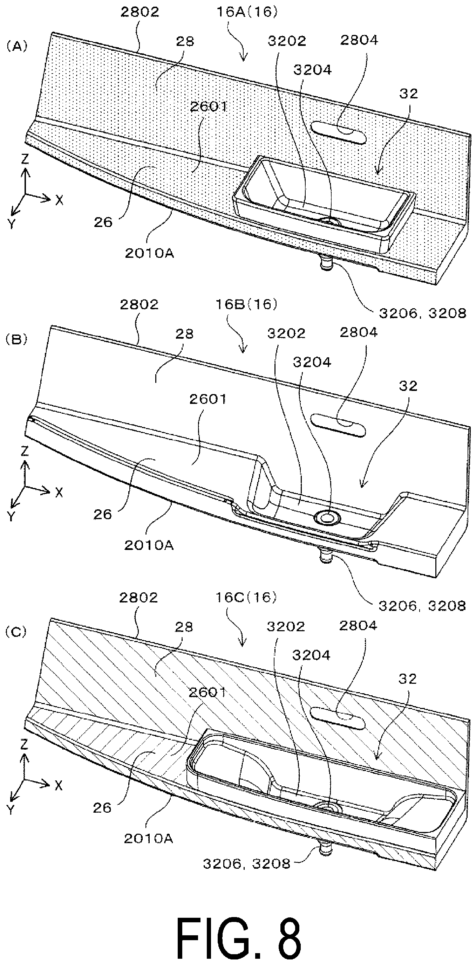

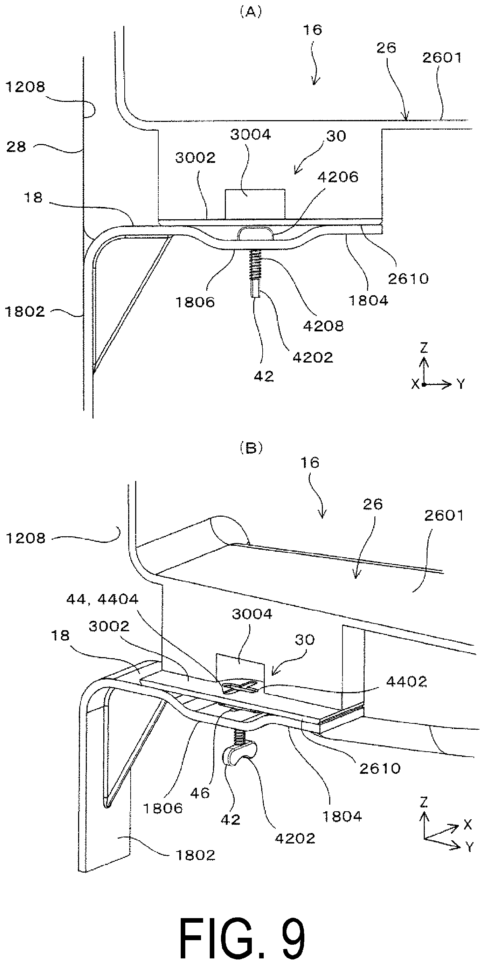

As illustrated in FIGS. 1 to 3(B), the sink 16 includes a counter table 26, a raised wall 28, and a bracket coupling portion 30 (see FIGS. 9(A) and 9(B)).
The counter table 26 is provided at a location above the floor board 1202 and has a length that spans the rear wall 1204 and the front wall 1206. An upper surface 2601 of the counter table 26 is parallel to the floor board 1202.
A basin 32 is provided at a location on the upper surface 2601 of the counter table 26 near the front wall 1206.
As illustrated in FIGS. 8(A) to 8(C), the basin 32 includes a bowl body 3202 recessed downward from the upper surface 2601, a drain hole 3204 provided at the bottom of the bowl body 3202, and a drainage member 3206 connected to the drain hole 3204 and protruding downward from the bottom of the bowl body 3202, as illustrated in FIGS. 5 to 7.
A lower portion 3208 of the drainage member 3206 is a portion at which an upper end of a drain pipe 33 (see FIG. 4) is releasably coupled.

For the sinks 16 manufactured according to the present embodiment, the shapes of the lower portions 3208 of the drainage members 3206 and the positions thereof in three axial directions, that is, the X-axis direction, the Y-axis direction, and the Z-axis direction are all formed to be identical.
As illustrated in FIGS. 5 to 7, a lower surface 2610A of the end portion of the counter table 26 away from the one side wall 1208 is formed in a shape corresponding to the upper surface 2010 of the lower storage portion 20 (upper end surface of the door 2002, 2004), and as described below, with the counter table 26 attached to the one side wall 1208 via the bracket coupling portion 30 and the bracket 18, the lower surface 2610A of the end portion of the counter table 26 is formed to meet or coincide with the upper surface 2010 of the lower storage portion 20.
Note that for the sink 16 manufactured according to the present embodiment, and the counter tables 26 all have an identical thickness, and the lower surfaces 2610A of the end portions of the counter tables 26 away from the one side wall 1208 are all formed in an identical shape.

As illustrated in FIGS. 5 to 7, the raised wall 28 is formed integrally with the counter table 26 and stands up from the end portion of the counter table 26 on the side of the one side wall 1208.
In the sink 16 manufactured according to the present embodiment, the raised wall 28 is formed to have a length such that the entire raised wall 28 is fixed by being sandwiched between the rear wall 1204 and the front wall 1206.
Further, in the sink 16 manufactured according to the present embodiment, an upper end surface 2802 of the raised wall 28 is formed in a shape corresponding to a lower surface 2410 of the upper storage portion 24, and the upper end surface 2802 of the raised wall 28 is formed so as to meet or coincide with the lower surface 2410 of the upper storage portion 24 with the raised wall 28 being pressed against the one side wall 1208.
As illustrated in FIGS. 8(A) to 8(C), the raised wall 28 has a faucet unit installation hole 2804 formed therethrough.
As illustrated in FIG. 4, the faucet unit installation hole 2804 is a location for disposing a faucet unit 40, which is releasably coupled to a faucet mounting seat 38 attached to the side wall 1208 and to which a hot water supply tube 34 and a cold water supply tube 36 are connected.

According to the present embodiment, in the aircraft lavatory unit 10 to which the sink 16 is applied, positions of the faucet mounting seats 38 and shapes of the faucet mounting seats 38 in the three axial directions are all formed to be identical.
As illustrated in FIGS. 5 to 7, the faucet unit 40 includes an elongated substrate 4002, a water supply tube 4003 protruding from the substrate 4002, a faucet 4004 provided on a lower surface of a tip portion of the water supply tube 4003, an operating handle 4006 for regulating the flow rate of water discharged from the faucet 4004, and a temperature adjustment handle 4008 (see FIG. 1(B)) for adjusting the temperature of water discharged from the faucet 4004.
Note that in the sink 16 manufactured according to the present embodiment, shapes and positions in the three axial directions of the faucet unit installation holes 2804 are all formed to be identical.
In addition, for the faucet unit 4, a faucet unit having a known coupling structure that can be coupled to and removed from the faucet mounting seat 38 by rotating the water supply tube 4003 from the inside of the lavatory 1002 is used.

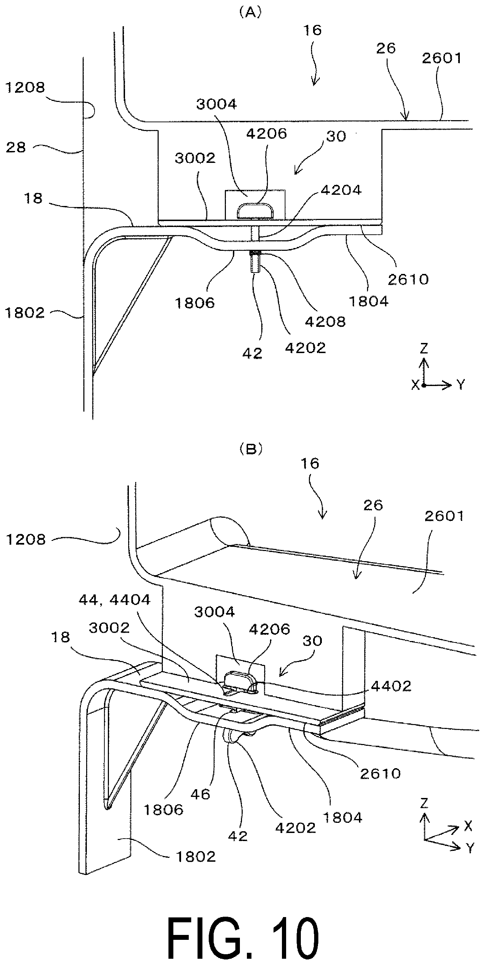

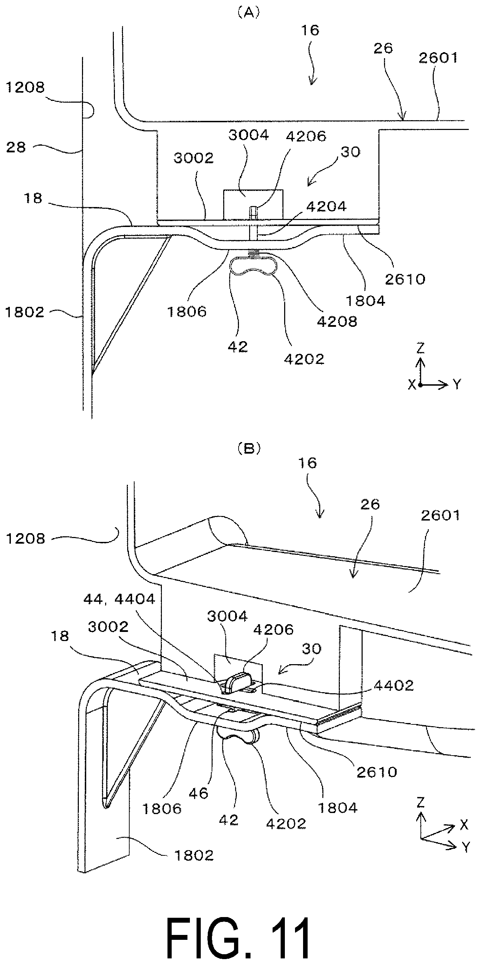

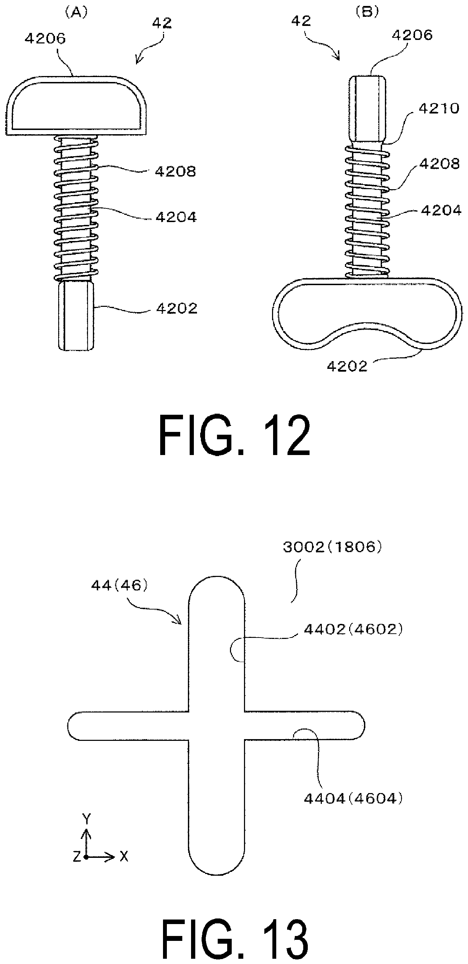

As illustrated in FIGS. 9(A) to 11(B), the bracket coupling portion 30 is provided at a location in the sink 16 supported by the bracket 18 and on the bottom surface 2610 of the counter table 26.
In the present embodiment, the counter table 26 is releasably coupled to the one side wall 1208 through the bracket 18 and the bracket coupling portion 30 using a locking lever 42.
The bracket 18 and the bracket coupling portion 30 may be releasably coupled using bolts or nuts, but by using the locking lever 42, engagement and disengagement between the bracket 18 and the bracket coupling portion 30 can be achieved quickly.
As illustrated in FIGS. 12(A) and 12(B), the locking lever 42 includes a gripped portion 4202, a shaft portion 4204, a locking portion 4206, and a coil spring 4208.
The gripped portion 4202 has an elongated shape so as to be easily gripped. The locking portion 4206 also has an elongated shape.
The shaft portion 4204 connects a center of the gripped portion 4202 in the longitudinal direction and a center of the locking portion 4206 in the longitudinal direction.
A narrow width portion 4210 that extends along the locking portion 4206 is formed on an end portion of the locking portion 4206 on the shaft portion 4204 side.
The coil spring 4208 is wound around the shaft portion 4204 and locks with the gripped portion 4202.
The gripped portion 4202 and the locking portion 4206 have intersecting extension directions when viewed from the axial direction of the shaft portion 4204. The gripped portion 4202 and the locking portion 4206 may extend in a direction that coincides when viewed from the axial direction of the shaft portion 4204. However, when the gripped portion 4202 and the locking portion 4206 extend in directions orthogonal to each other when viewed from the axial direction of the shaft portion 4204 as in the present embodiment, it can be instantaneously determined at a glance that the locking lever 42 is rotated to be used, which is advantageous for easily engaging and disengaging the bracket 18 and the bracket coupling portion 30.

As illustrated in FIG. 4, a plurality of the brackets 18 are provided at a plurality of locations separated at intervals in the longitudinal direction of the counter table 26 on the one side wall 1208, and are provided at three locations in the present embodiment.
As illustrated in FIGS. 9(A) and 9(B), the bracket 18 includes a base portion 1802 attached to the side wall 1208, and an installation plate portion 1804 protruding from an upper end of the base portion 1802 in a direction separating from the side wall 1208.
At a center of the installation plate portion 1804 in the longitudinal direction, a bottom plate portion 1806 that is displaced downward relative to both sides in the longitudinal direction is provided, and a cross groove 46 is formed in the bottom plate portion 1806.
As illustrated in FIG. 13, the cross groove 46 includes an insertion groove 4602 that allows insertion of the shaft portion 4204 and the locking portion 4206, and a locking groove 4604 in which the narrow width portion 4210 of the locking portion 4206 can be locked.
Furthermore, as described above, in the aircraft lavatory unit 10 to which the sink 16 of the present embodiment is applied, the positions and shapes of the brackets 18 in the three axial directions are formed to be identical, and the positions and shapes of the cross grooves 46 of the brackets 18 in the three axial directions are also formed to be identical.
Additionally, the insertion groove 4602 corresponds to a bracket lateral groove in the claims. Furthermore, the installation plate portion 1804 corresponds to a support plate portion in the claims.

A plurality of bracket coupling portions 30 are provided at a plurality of locations separated at intervals in the longitudinal direction of the counter table 26 on the lower surface 2610 of the counter table 26, and three bracket coupling portions are provided at three locations in the present embodiment.
The bracket coupling portion 30 includes a coupling plate portion 3002 and a storage space 3004.
The coupling plate portion 3002 is a portion that is coupled to and supported by the installation plate portion 1804, and as illustrated in FIG. 13, includes a cross groove 44 having an identical shape to the cross groove 46 of the installation plate portion 1804 and including an insertion groove 4402 and a locking groove 4404. The cross groove 44 of the coupling plate portion 3002 and the cross groove 46 of the installation plate portion 1804 are provided so as to coincide in a plan view in a state where the coupling plate portion 3002 is placed on the installation plate portion 1804.
In the present embodiment, the insertion groove 4402 of the bracket coupling portion 30 corresponds to the bracket coupling portion lateral groove in the claims. Furthermore, the coupling plate portion 3002 corresponds to the supported plate portion in the claims.
The storage space 3004 is a portion where the locking portion 4206 is stored, and is provided above the cross groove 44.
Note that in the sink 16 manufactured according to the present embodiment, the bracket coupling portions 30 are formed such that numbers of bracket coupling portions 30 are all identical, positions of the bracket coupling portions 30 in the three axial directions are all identical, and positions and shapes of the cross groove 44 of the bracket coupling portions 30 in the three axial directions are also identical.

Coupling between the bracket 18 and the bracket coupling portion 30 is such that, with the coupling plate portion 3002 placed on the installation plate portion 1804, the locking portion 4206 of the locking lever 42 is inserted through the insertion groove 4602 of the installation plate portion 1804 and the insertion groove 4402 of the coupling plate portion 3002 to be located above the coupling portion 3002, the gripped portion 4202 is gripped and rotated by 90 degrees, and then a hand is released from the gripped portion 4202.
With this operation, since the coil spring 4208 is compressed between the installation plate portion 1804 and the gripped portion 4202, the locking portion 4206 is urged downward, the narrow width portion 4210 of the lower end of the locking portion 4206 is locked on the locking groove 4404 due to an elastic force of the coil spring 4208, a state in which the narrow width portion 4210 is locked on the locking groove 4404 is held due to the elastic force of the coil spring 4208, and thus a state in which the coupling plate portion 3002 and the mounting plate portion 1804 are coupled is maintained.
In this case, even if an upward external force acts on the counter table 26, the coupling plate portion 3002 and the installation plate portion 1804 are sandwiched between the gripped portion 4202 and the locking portion 4206 with the coil spring 4208 interposed therebetween, and thus the counter table 26 does not disengage upward from the bracket 18.

Note that the locking groove 4404 and the narrow width portion 4210 of the coupling plate portion 3002 can be omitted, and in a configuration where the locking groove 4404 and the narrow width portion 4210 are omitted, the end portion of the locking portion 4206 is locked on the coupling plate portion 3002 in a direction intersecting the extension direction of the insertion groove 4402.
Additionally, the locking groove 4604 and the narrow width portion 4210 of the installation plate portion 1804 can be omitted, and in a configuration where the locking groove 4604 and the narrow width portion 4210 are omitted, the end portion of the locking portion 4206 is locked on the installation plate portion 1804 in a direction intersecting the extension direction of the insertion groove 4602. However, when the locking groove 4604 and the narrow width portion 4210 are provided in the installation plate portion 1804 as in the present embodiment, when removing the bracket 18 and the bracket coupling portion 30, locking the narrow width portion 4210 of the locking portion 4206 on the locking groove 4604 prevents the locking lever 42 from falling out from the installation plate portion 1804, which is advantageous in preventing loss of the locking lever 42.
In addition, in the cross groove 44 of the coupling plate portion 3002 and the cross groove 46 of the mounting plate portion 1804, phases of the insertion grooves and the locking grooves may differ from each other by 90 degrees in a plan view. However, forming the cross groove 44 and the cross groove 46 such that the phases of the insertion grooves and the locking grooves coincide as in the present embodiment is advantageous for easily inserting the locking portion 4206 into the insertion groove 4402 of the coupling plate portion 3002.
Note that the locking lever 42 can be used in common with all of the sinks 16 manufactured in the present embodiment.

In the present embodiment, in the sink 16 having the configuration described above, as illustrated in FIGS. 8(A) to 8(C), it is possible to provide a plurality of types of a first sink 16A, a second sink 16B, a third sink 16C ... that differ in at least one of the color of the counter table 26, the color of the raised wall 28, the shape of the basin 32, and the color of the basin 32.
In the second sink 16B illustrated in FIG. 8(A), the counter table 26 and the raised wall 28 are made blue, and the basin 32 is made white and formed as a lavatory container that protrudes from the top surface 2601 of the counter table 26.
The first sink 16A illustrated in FIG. 8(B) is entirely white, and the basin 32 is formed recessed from the upper surface 2601 of the counter table 26.
In the third sink 16C illustrated in FIG. 8(C), the counter table 26 and the raised wall 28 are made pink, and the basin 32 is made white and formed as a lavatory container that is horizontally longer than the basin 32 of each of the first sink 16A and the second sink 16B and protrudes from the top surface 2601 of the counter table 26.

Here, for example, the first sink 16A is manufactured, the raised wall 28 is pressed against the one side wall 1208 while sandwiching both ends of the raised wall 28 in the longitudinal direction between the rear wall 1204 and the front wall 1206, and the counter table 26 is attached to the bracket 18 using the bracket coupling portion 30 and the locking lever 42, so that the first sink 16A is mounted on the one side wall 1208.
Then, the faucet unit 40 is releasably coupled to the faucet mounting seat 38 via the faucet unit installation hole 2804.
In this manner, as illustrated in FIGS. 1(A), 1(B), and 5, the first sink 16A is installed in the lavatory 1002, and the aircraft lavatory unit 10 is completed.

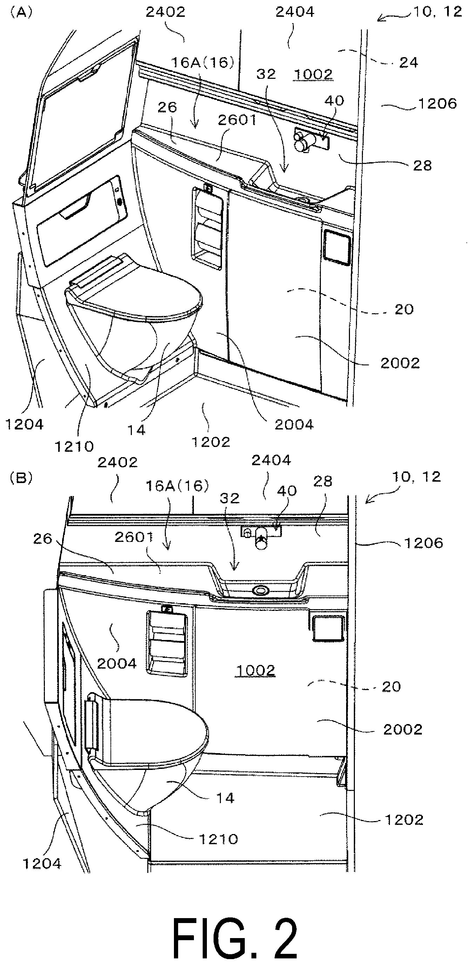

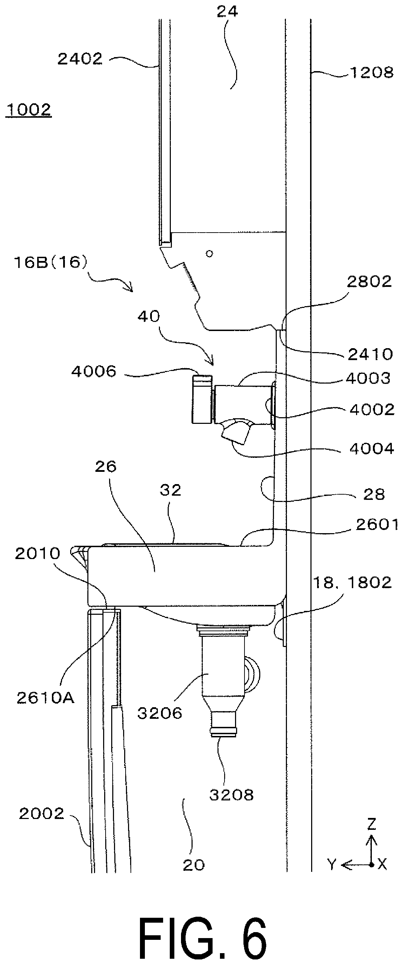

Then, if there is a request to change the sink 16, one of the second sink 16B and the third sink 16C ..., for example, the second sink 16B is manufactured and the first sink 16A is replaced with the second sink 16B. For the change of the sink 16, a worker pushes the gripped portions 4202 of the locking levers 42 upward and rotates these portions by 90 degrees at the locations of the three brackets 18, and then moves the gripped portions 4202 downward. With this operation, the locking portion 4206 is removed from the locking groove 4404, and the locking portion 4206 is positioned below the coupling plate portion 3002 through the insertion groove 4402 of the coupling plate portion 3002. Here, when the worker rotates the gripped portions 4202 by 90 degrees and releases their hand, the locking portion 4206 is locked on the locking groove 4604 of the installation plate portion 1804, and this locked state is held by the elastic force of the coil spring 4208, which prevents loss of the locking lever 42.
If the coupling between the bracket 18 and the bracket coupling portion 30 is released in this manner, the faucet unit 40 is removed from the faucet mounting seat 38, the raised wall 28 is removed from between the rear wall 1204 and the front wall 1206, and the first sink 16A is removed from the lavatory 1002.
When the first sink 16A has been removed, the second sink 16B with which the first sink 16A is to be replaced is mounted on the one side wall 1208 by using the bracket 18, the bracket coupling portion 30, and the locking lever 42 as described above, to thereby install the new second sink 16B in the lavatory 1002 as illustrated in FIGS. 2(A), 2(B), and 6.

Thus, according to the aircraft lavatory unit 10 of the present embodiment, even if an airline company requests replacement of the sink 16, it is not necessary to redesign the mounting structure of the sink 16 on the side wall 1208, the location where the faucet unit 40 is disposed, and other factors from scratch, and thus the sink 16 can be replaced with a new sink 16 in a short period of time and at low cost.
Further, the raised wall 28 is fixed by being sandwiched by the front wall 1206 and the rear wall 1204 in a direction in which the front wall 1206 and the rear wall 1204 face each other, and at a plurality of locations separated at intervals in the direction in which the front wall 1206 and the rear wall 1204 face each other, the sink 16 is coupled in an unmovable manner by using the brackets 18 and the bracket coupling portions 30 in an upward direction, the direction in which the front wall 1206 and the rear wall 1204 face each other, and a direction in which the pair of side walls 1208 face each other, which is advantageous for mounting the sink 16 on the structural frame 12 in a stable state.

In addition, in the sink 16 of the present embodiment, the positions of the lower portions 3208 of the drainage members 3206 in the three axial directions are all identical, which is advantageous for easily coupling these members with the upper end of the drain pipe 33 and replacing the sink 16 in a short period of time.
In addition, because engagement and disengagement between the plurality of brackets 18 and the plurality of bracket coupling portions 30 is performed by operating the locking lever 42, it is possible to perform engagement and disengagement easily and quickly without requiring a tool such as an open-end wrench, which is advantageous for replacing the sink 16 in a short period of time.

### Reference Signs List

- 10: Aircraft lavatory unit
- 1002: Lavatory
- 1202: Floor board
- 1204: Rear wall
- 1206: Front wall
- 1208: Side wall
- 14: Toilet
- 16: Sink
- 18: Bracket
- 1804: Installation plate portion (support plate portion)
- 20: Lower storage portion
- 2010: Upper surface
- 22: Trash can device
- 24: Upper storage portion
- 2410: Lower surface
- 16: Sink
- 16A: First sink
- 16B: Second sink
- 16C: Third sink
- 26: Counter table
- 2610: Lower surface
- 2610A: Lower surface of end portion
- 28: Raised wall
- 2802: Upper end surface
- 2804: Faucet unit installation hole
- 30: Bracket coupling portion
- 3002: Coupling plate portion (supported plate portion)
- 3004: Storage space
- 32: Basin
- 3204: Drain hole
- 3206: Drainage member
- 33: Drain pipe
- 42: Locking lever
- 4202: Gripped portion
- 4204: Shaft portion
- 4206: Locking portion
- 4208: Coil spring
- 4402: Insertion groove (bracket coupling portion lateral groove)
- 4602: Insertion groove (bracket lateral groove)

## Claims

1. A method of manufacturing an aircraft lavatory unit, the aircraft lavatory unit comprising:
a structural frame comprising a floor board, a front wall that stands up from the floor board, a rear wall that stands up from the floor board and faces the front wall, and a pair of side walls that stand up from the floor board and connect both sides of the rear wall and both sides of the front wall to create an interior serving as a lavatory; and
a sink provided on one side wall of the pair of side walls inside the structural frame, the method comprising:
providing a faucet mounting seat to which a faucet unit is releasably coupled on the one side wall, and providing a plurality of brackets separated at intervals in a direction in which the front wall and the rear wall face each other;
forming the sink comprising a counter table comprising a basin on a top surface of the counter table and a plurality of bracket coupling portions, each of which being releasably coupled to each of the plurality of brackets on a bottom surface of the counter table, and a raised wall that stands up from an end portion of the counter table on a side of the one side wall, comprises a faucet installation hole used for coupling the faucet unit to the faucet mounting seat formed penetrating the raised wall, and is pressed against the one side wall, the raised wall formed with a length such that the raised wall is fixed by being sandwiched between the rear wall and the front wall;
in manufacturing the structural frame, forming shapes and positions of the faucet mounting seat and the plurality of brackets in three axial directions to be identical, the three axial directions being an X-axis direction in which the front wall and the rear wall face each other, a Y-axis direction in which the pair of side walls face each other, and a Z-axis direction that is a vertical direction; and
in manufacturing the sink, forming shapes and positions of the faucet installation hole and the plurality of bracket coupling portions to be identical in the three axial directions.

2. The method of manufacturing an aircraft lavatory unit according to claim 1, wherein:
the sink comprises a drainage member connected to a drain hole of the basin, and
in manufacturing the sink, shapes and positions of a lower portion of the drainage member in the three axial directions are formed to be identical,
the lower portion of the drainage member being releasably coupled to an upper portion of a drain pipe.

3. The method of manufacturing an aircraft lavatory unit according to claim 1 or 2, wherein:
a lower storage portion for storing a trash can device is provided at a location on the one side wall below the sink, and
in manufacturing the sink, a location on a lower surface of an end portion of the counter table away from the one side wall is formed into a shape corresponding to a top surface of the lower storage portion.

4. The method of manufacturing an aircraft lavatory unit according to any one of claims 1 to 3, wherein:
an upper storage portion for storing consumable supplies of the lavatory is provided at a location on the one side wall above the sink, and
in manufacturing the sink, an upper end surface of the raised wall is formed into a shape corresponding to a lower surface of the upper storage portion.

5. The method of manufacturing an aircraft lavatory unit according to any one of claims 1 to 4, wherein:
a locking lever is provided, the locking lever comprising:
a gripped portion being grippable and having an elongated shape;
a shaft portion projecting from a central portion of the gripped portion in a longitudinal direction of the gripped portion;
a locking portion comprising a central portion in a longitudinal direction of the locking portion attached to a tip of the shaft portion and having an elongated shape; and
a coil spring being wound around the shaft portion and lockable to the gripped portion,
each of the plurality of brackets comprises a support plate portion that supports each of the plurality of bracket coupling portions from below, and
a bracket lateral groove formed in the support plate portion and that allows insertion of the shaft portion and the locking portion,
each of the plurality of bracket coupling portions comprises:
a supported plate portion supported by the support plate portion;
a storage space provided above the supported plate portion that allows storage of the locking portion; and
a bracket coupling portion lateral groove provided in the supported plate portion and that allows insertion of the shaft portion and the locking portion, and
each of the plurality of brackets and each of the plurality of bracket coupling portions are coupled by placing the supported plate portion on the support plate portion, inserting the shaft portion through the bracket lateral groove and the bracket coupling portion lateral groove, causing a longitudinal direction of the locking portion to extend in a direction intersecting the longitudinal direction of the bracket coupling portion lateral groove in the storage space, and locking the locking portion to the supported plate portion by using an elastic force of the coil spring compressed between the gripped portion and the support plate portion, the gripped portion being located below the support plate portion.

6. The method of installing a sink in an aircraft lavatory unit according to claim 5, wherein
the gripped portion and the locking portion extend in mutually orthogonal directions when viewed from an axial direction of the shaft portion.

7. The method of installing a sink in an aircraft lavatory unit according to claim 5 or 6, wherein:
a cross groove is formed in the support plate portion, the cross groove comprising an insertion groove that allows insertion of the shaft portion and the locking portion, and a locking groove to which a lower end of the locking portion is lockable,
the bracket lateral groove is formed of the insertion groove of the support plate portion,
a cross groove having a shape identical to a shape of the cross groove is formed in the coupling plate portion, the cross groove comprising the insertion groove and the locking groove, and
the bracket coupling portion lateral groove is formed of the insertion groove of the coupling plate portion.
